# EUROPÄISCHE PATENTSCHRIFT

(11) **EP 3 170 656 B1**
(45) Veröffentlichungstag und Bekanntmachung des Hinweises auf die Patenterteilung: **01.08.2018**
(21) Anmeldenummer: 15195886.5
(22) Anmeldetag: 23.11.2015
(51) Int. Cl.: B32B 1/08, B32B 27/34, B60K 15/01

(54) **TANK-INNENROHRLEITUNG UND TANK MIT ZUMINDEST EINER TANK-INNENROHRLEITUNG**
INTERNAL TANK PIPELINE AND TANK WITH AT LEAST ONE INTERNAL PIPELINE
CONDUITE INTERNE DE RÉSERVOIR ET RÉSERVOIR COMPRENANT UNE CONDUITE INTERNE

(43) Veröffentlichungstag der Anmeldung: 24.05.2017
(73) Patentinhaber: TI Automotive (Fuldabrück) GmbH, 34277 Fuldabrück (DE)
(72) Erfinder: Zimmer, Werner, 34212 Melsungen/Röhrenfurth (DE)
(74) Vertreter: Rohmann, Michael

(56) Entgegenhaltungen:
- EP-A1- 2 738 031
- WO-A1-2015/033982
- US-A- 5 524 673
- US-A1- 2003 192 612
- US-A1- 2004 013 835
- US-A1- 2007 134 458

## Beschreibung

Die Erfindung betrifft eine Tank-Innenrohrleitung, insbesondere in Kraftstofftanks von Kraftfahrzeugen, wobei die Rohrleitung einen von einer Rohrwandung umgebenen Fluidkanal aufweist. Die Erfindung betrifft fernerhin einen Tank mit zumindest einer solchen Tank-Innenrohrleitung. - Tank-Innenrohrleitung meint im Rahmen der Erfindung, dass die erfindungsgemäße Rohrleitung in dem Innenraum eines Tanks angeordnet ist bzw. durch den Innenraum eines Tanks verläuft. Dabei handelt es sich insbesondere um eine Tank-Innenrohrleitung, die durch den Innenraum eines Kraftstofftanks eines Kraftfahrzeuges verläuft. Insoweit betrifft die Erfindung vor allem eine Kraftfahrzeug-Tank-Innenrohrleitung. Die US 2007/134458 A1 offenbart eine Rohrleitung, wobei die Rohrleitung einen von einer Rohrwandung umgebenen Fluidkanal aufweist, wobei die Rohrwandung aus zumindest drei Schichten besteht, wobei eine Außenschicht auf Basis eines aromatischen Polyamids vorgesehen ist, wobei eine Zwischenschicht vorhanden ist und wobei eine Innenschicht auf Basis eines aromatischen Polyamids vorgesehen ist.

Tank-Innenrohrleitungen sind grundsätzlich aus der Praxis in verschiedenen Ausführungsformen bekannt. Das gilt auch für Tank-Innenrohrleitungen in Kraftstofftanks von Kraftfahrzeugen. Diese Rohrleitungen sind bislang so ausgelegt, dass sie lediglich bis zu einer Temperatur von 70 °C beständig sind bzw. problemlos betrieben werden können. Außerdem haben viele dieser bekannten Rohrleitungen den Nachteil, dass mit dem durchströmenden Kraftstoff Komponenten aus dem Material der Rohrleitungswandung ausgewaschen werden können. Dadurch wird zumindest langfristig die Funktionsfähigkeit des Kraftstoffsystems negativ beeinträchtigt. Fernerhin sind viele dieser bekannten Rohrleitungen relativ aufwendig aufgebaut und/oder benötigen verhältnismäßig hohe Mengen an Kunststoffmaterial für die Rohrleitungswandungen. Insoweit sind die bekannten Tank-Innenrohrleitungen verbesserungsfähig.

Der Erfindung liegt dementsprechend das technische Problem zugrunde, eine Tank-Innenrohrleitung der eingangs genannten Art anzugeben, die sich durch eine hohe Temperaturbeständigkeit, insbesondere bis zu Temperaturen von zumindest 120° auszeichnet, deren Wandungsmaterial gegen unerwünschte Auswaschungen beständig ist und die im Übrigen einfach und wenig aufwendig aufgebaut bzw. fertigbar ist. Der Erfindung liegt weiterhin das technische Problem zugrunde, einen Tank mit zumindest einer solchen Tank-Innenrohrleitung anzugeben.

Zur Lösung dieses technischen Problems lehrt die Erfindung einen Tank gemäß Anspruch 1. Es liegt im Rahmen der Erfindung, dass die Außenschicht aus zumindest 80 Gew.-%, vorzugsweise aus zumindest 85 Gew.-%, bevorzugt aus zumindest 90 Gew.-% und sehr bevorzugt aus zumindest 95 Gew.-% eines aromatischen Polyamids und empfohlenermaßen aus Polyphthalamid (PPA) besteht. Nach einer sehr bewährten Ausführungsform besteht die Außenschicht aus zumindest 97 Gew.-%, bevorzugt aus zumindest 98 Gew.-% des aromatischen Polyamids, empfohlenermaßen aus Polyphthalamid (PPA). - Es empfiehlt sich, dass die Außenschicht eine Schichtdicke von 0,1 mm bis 1,3 mm, vorzugsweise von 0,2 mm bis 1,2 mm, bevorzugt von 0,2 mm bis 1 mm und sehr bevorzugt von 0,25 mm bis 0,9 mm aufweist. - Es liegt im Rahmen der Erfindung, dass die Außenschicht elektrisch leitfähig ausgebildet ist. Dazu weist die Außenschicht zweckmäßigerweise geeignete Leitfähigkeitszusätze - wie beispielsweise Ruß oder dergleichen - auf.

Es empfiehlt sich, dass die Zwischenschicht aus zumindest 80 Gew.-%, vorzugsweise aus zumindest 85 Gew.-%, bevorzugt aus zumindest 90 Gew.-% und sehr bevorzugt aus zumindest 95 Gew.-% eines Polyamids und bevorzugt eines aliphatischen Polyamids besteht. Gemäß sehr bevorzugter Ausführungsform der Erfindung besteht die Zwischenschicht aus zumindest 97 Gew.-% und bevorzugt aus zumindest 98 Gew.-% aus dem Polyamid, empfohlenermaßen aus dem aliphatischen Polyamid. Eine besonders bewährte Ausführungsform der Erfindung ist dadurch gekennzeichnet, dass die Zwischenschicht auf Basis von Polyamid 6 ausgebildet ist. Nach einer anderen Ausführungsform ist die Zwischenschicht auf Basis von Polyamid 12 und/oder von Polyamid 6.6 ausgebildet. - Es empfiehlt sich, dass die Zwischenschicht eine Schichtdicke von 0,1 bis 1,3 mm, vorzugsweise von 0,2 bis 1,2 mm, bevorzugt von 0,2 mm bis 1 mm und sehr bevorzugt von 0,25 mm bis 0,9 mm aufweist. Grundsätzlich kann auch die Zwischenschicht elektrisch leitfähig ausgebildet sein.

Es liegt im Rahmen der Erfindung, dass die Innenschicht der Rohrleitung aus zumindest 80 Gew.-%, vorzugsweise aus zumindest 85 Gew.-%, bevorzugt aus zumindest 90 Gew.-% und sehr bevorzugt aus zumindest 95 Gew.-% eines aromatischen Polyamids und empfohlenermaßen aus Polyphthalamid (PPA) besteht. Besonders bewährt hat sich im Rahmen der Erfindung, dass die Innenschicht aus zumindest 97 Gew.-% und bevorzugt aus zumindest 98 Gew.-% des aromatischen Polyamids und empfohlenermaßen des Polyphthalamids (PPA) besteht. - Es empfiehlt sich, dass die Innenschicht der Rohrleitung eine Schichtdicke von 0,1 mm bis 1,3 mm, vorzugsweise von 0,2 mm bis 1,2 mm, bevorzugt von 0,2 mm bis 1 mm und besonders bevorzugt von 0,25 mm bis 0,9 mm aufweist. - Es hat sich bewährt, dass die Außenschicht elektrisch leitfähig eingerichtet ist. Hierzu wird die Außenschicht zweckmäßigerweise mit geeigneten Leitfähigkeitszusätzen - beispielsweise mit Ruß oder dergleichen - versehen.

Eine bevorzugte Ausführungsform der Erfindung zeichnet sich dadurch aus, dass die Zwischenschicht eine höhere Schichtdicke aufweist als die Außenschicht und/oder die Innenschicht. Zweckmäßigerweise ist die Zwischenschicht als dickste Schicht der Rohrwandung der erfindungsgemäßen Tank-Innenrohrleitung ausgebildet. Vorzugsweise ist die Zwischenschicht 1,1-bis 2,5-mal und bevorzugt 1,2- bis 2-mal sowie sehr bevorzugt 1,2- bis 1,8-mal so dick wie die Außenschicht und/oder die Innenschicht. - Gemäß bewährter Ausführungsvariante der Erfindung ist sowohl die Außenschicht als auch die Innenschicht elektrisch leitfähig eingerichtet. Grundsätzlich kann auch die Zwischenschicht elektrisch leitfähig eingerichtet sein.

Eine besonders empfohlene Ausführungsform der Erfindung ist dadurch gekennzeichnet, dass die erfindungsgemäße Tank-Innenrohrleitung lediglich die drei Schichten mit Außenschicht, Zwischenschicht und Innenschicht aufweist. Grundsätzlich kann die erfindungsgemäße Tank-Innenrohrleitung aber noch über weitere Schichten verfügen. So kann die Außenschicht mit der Zwischenschicht über eine Adhäsivschicht verbunden sein, welche Adhäsivschicht die Haftung zwischen Außenschicht und Zwischenschicht verbessert. Alternativ oder zusätzlich kann die Zwischenschicht mit der Innenschicht über eine Adhäsivschicht verbunden sein, welche Adhäsivschicht die Haftung zwischen der Innenschicht und der Zwischenschicht verbessert. Es liegt auch im Rahmen der Erfindung, dass zwischen der Außenschicht und der Innenschicht zumindest eine Barriereschicht mit Barriereeigenschaften bezüglich des durch die Rohrleitung geleiteten Kraftstoffes bzw. bezüglich einer Komponente dieses Kraftstoffes angeordnet ist.

Gemäß einer Ausführungsvariante ist die Tank-Innenrohrleitung an eine in dem zugeordneten Tank - insbesondere in dem zugeordneten Kraftstofftank des Kraftfahrzeuges - angeordnete Pumpe angeschlossen. Mit der Pumpe wird das im Tank vorhandene fluide Medium bzw. der im Kraftstofftank angeordnete Kraftstoff durch die Tank-Innenrohrleitung gefördert. Die erfindungsgemäße Tank-Innenrohrleitung kann aber auch zum Druckausgleich und/oder zum Niveau-Ausgleich zwischen verschiedenen Bereichen des Tanks bzw. Kraftstofftanks dienen. In jedem Fall ist die erfindungsgemäße Tank-Innenrohrleitung im Inneren bzw. im Innenraum eines Tanks bzw. Kraftstofftanks angeordnet.

Eine besonders bevorzugte Ausführungsform der Erfindung ist dadurch gekennzeichnet, dass die erfindungsgemäße Tank-Innenrohrleitung zumindest bereichsweise - vorzugsweise vollständig - in Form eines Wellrohres ausgestaltet ist. Es liegt dabei im Rahmen der Erfindung, dass die Wellenberge und Wellentäler der Rohrleitung über den Umfang der Rohrleitung umlaufen. Zweckmäßigerweise haben die Wellenberge und die Wellentäler der Rohrleitung über zumindest einen Teil der Länge der Rohrleitung, vorzugsweise über die gesamte Länge bzw. im Wesentlichen über die gesamte Länge der Rohrleitung gleiche/konstante Abstände voneinander bzw. im Wesentlichen gleiche/konstante Abstände voneinander. Die Ausführungsform als Wellrohr hat sich im Rahmen der Erfindung besonders bewährt. Diese Ausgestaltung weist Gemäß einer Ausführungsform des Tanks ist dabei die Tank-Innenrohrleitung zumindest bereichsweise an der Wandung des Tanks bzw. Kraftstofftanks angeordnet. Grundsätzlich kann die Tank-Innenrohrleitung aber auch durch andere Bereiche des Tanks bzw. Kraftstofftanks verlaufen.

Der Erfindung liegt die Erkenntnis zugrunde, dass sich die erfindungsgemäße Tank-Innenrohrleitung durch eine hervorragende Temperaturbeständigkeit und zudem auch durch eine optimale mechanische Widerstandsfähigkeit auszeichnet. Die erfindungsgemäßen Rohrleitungen sind bei Temperaturen von -40 °C bis zu 120 °C und mehr beständig und können somit für verschiedenste Zwecke in Tanks, insbesondere in Kraftstofftanks von Kraftfahrzeugen zum Einsatz kommen. Der Erfindung liegt insoweit auch die Erkenntnis zugrunde, dass zunehmend temperaturbeständigere Rohrleitungen für den Innenraum von Tanks bzw. Kraftstofftanks notwendig werden. - Die erfindungsgemäßen Tank-Innenrohrleitungen erweisen sich auch bei der Herstellung eines Tanks nach dem Ship-in-Bottle-Prinzip als sehr vorteilhaft. Dabei wird ein Schlauch aus dem Tankwandungsmaterial mit allen erforderlichen Aggregaten - wie beispielsweise Pumpe, Füllstandssensor und dergleichen - bestückt und dann durch Aufblasen in die gewünschte Form gebracht. Dazu wird der Schlauch relativ stark aufgeheizt. Die erfindungsgemäßen Tank-Innenrohrleitungen - die ebenfalls in dem Schlauch angeordnet wurden - überstehen diese Behandlung ohne Probleme. - Von besonderem Vorteil ist bei der erfindungsgemäßen Tank-Innenrohrleitung weiterhin, dass sie problemlos und ohne Einschränkungen auch für unterschiedliche Kraftstoffarten - wie Benzin oder Diesel - einsetzbar ist. Die erfindungsgemäße Rohrleitung zeichnet sich fernerhin auch durch eine optimale chemische Beständigkeit aus. Auswaschungen von Kunststoffkomponenten durch den durch die Rohrleitung geleiteten Kraftstoff finden quasi nicht statt bzw. nur in vernachlässigbarem Ausmaß statt. Die erfindungsgemäße Tank-Innenrohrleitung genügt weiterhin auch allen mechanischen Anforderungen. Fernerhin ist sie auf einfache und wenig aufwendige Weise und insbesondere materialsparende Weise herstellbar.

Nachfolgend wird die Erfindung anhand einer lediglich ein Ausführungsbeispiel darstellenden Zeichnung näher erläutert. Es zeigen in schematischer Darstellung:

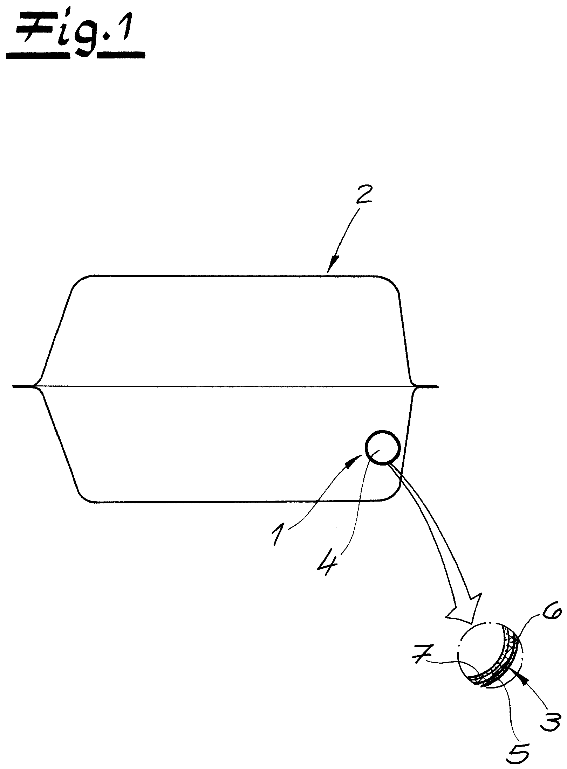

- Fig. 1: einen Schnitt durch einen Kraftstofftank eines Kraftfahrzeuges mit einer erfindungsgemäßen Tank-Innenrohrleitung und
- Fig. 2: die erfindungsgemäße Tank-Innenrohrleitung in perspektivischer Darstellung.

In den Figuren ist eine erfindungsgemäße Tank-Innenrohrleitung 1 dargestellt, die sich bevorzugt und im Ausführungsbespiel in einem Kraftstofftank 2 eines Kraftfahrzeuges befindet. In einem mit der erfindungsgemäßen Rohrleitung 1 versehenen Kraftstofftank 2 können grundsätzlich verschiedene Arten von Kraftstoffen, beispielsweise Dieselkraftstoff oder Benzin aufgenommen werden. Die erfindungsgemäße Rohrleitung 1 weist wie üblich einen von einer Rohrwandung 3 umgebenen Fluidkanal 4 auf.

Nach einer bevorzugten Ausführungsform und im Ausführungsbeispiel weist die Rohrwandung 3 drei Schichten 5, 6, 7 auf. Die Außenschicht 5 besteht vorzugsweise und im Ausführungsbeispiel aus Polyphthalamid (PPA) bzw. im Wesentlichen aus Polyphthalamid (PPA). Neben Polyphthalamid (PPA) kann die Außenschicht 5 Zusätze, wie Leitfähigkeitszusätze oder stabilisierende Zusätze oder dergleichen aufweisen. Im Ausführungsbeispiel ist unmittelbar an die Außenschicht 5 eine Zwischenschicht 6 angeschlossen, die empfohlenermaßen und im Ausführungsbeispiel aus einem aliphatischen Polyamid bzw. im Wesentlichen aus einem aliphatischen Polyamid besteht und zwar bevorzugt und im Ausführungsbeispiel aus Polyamid 6. Außerdem kann die Zwischenschicht 6 Zusätze, wie Leitfähigkeitszusätze, stabilisierende Zusätze und dergleichen aufweisen. Bevorzugt und im Ausführungsbeispiel ist unmittelbar an die Zwischenschicht 6 die Innenschicht 7 angeschlossen. Diese Innenschicht 7 besteht empfohlenermaßen und im Ausführungsbeispiel aus Polyphthalamid (PPA) bzw. im Wesentlichen aus Polyphthalamid (PPA). Weiterhin kann auch diese Innenschicht 7 Zusätze wie Leitfähigkeitszusätze, Stabilisierungszusätze und dergleichen enthalten.

Vorzugsweise und im Ausführungsbeispiel liegt die Gesamtwandstärke der Rohrwandung 3 zwischen 0,8 und 2,0 mm. Die Schichtdicken der drei Schichten 5, 6, 7 betragen empfohlenermaßen und im Ausführungsbeispiel jeweils 15 bis 45% der Gesamtwandstärke. Bevorzugt und im Ausführungsbeispiel ist die Zwischenschicht 6 dicker ausgebildet als die Außenschicht 5 und auch dicker ausgebildet als die Innenschicht 7. Diese Ausführungsform hat sich im Rahmen der Erfindung besonders bewährt.

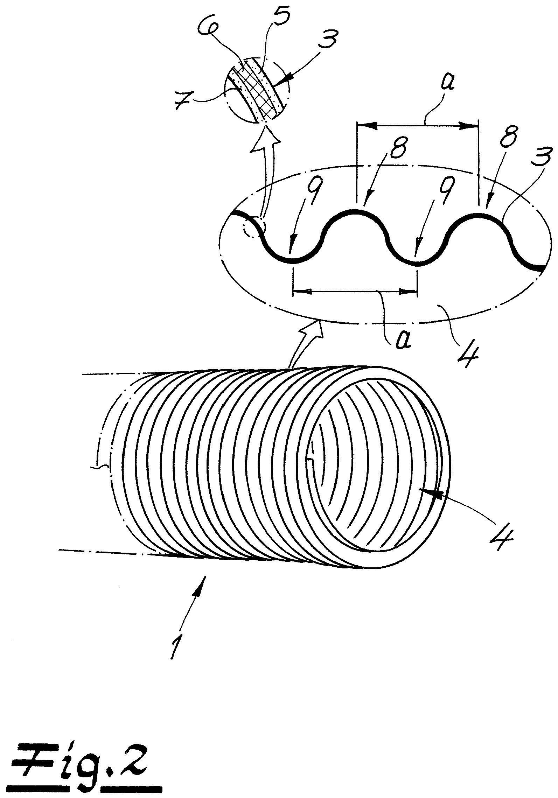

Vorzugsweise und im Ausführungsbeispiel sind alle drei Schichten 5, 6, 7 elektrisch leitfähig ausgebildet. Dazu weisen die Schichten 5, 6, 7 geeignete Leitfähigkeitszusätze, wie Ruß oder dergleichen auf. - Nach ganz besonders bevorzugter Ausführungsform und im Ausführungsbeispiel ist die erfindungsgemäße Tank-Innenrohrleitung 1 als Wellrohr ausgebildet. Das ist insbesondere in der Fig. 2 erkennbar. Bei dieser wellrohrförmig ausgebildeten Tank-Innenrohrleitung 1 laufen die Wellenberge 8 und die Wellentäler 9 bevorzugt und im Ausführungsbeispiel über den gesamten Umfang der Rohrleitung 1 um. Die Wellenberge 8 und die Wellentäler 9 haben im Übrigen empfohlenermaßen und im Ausführungsbeispiel gleiche bzw. konstante Abstände a über die Länge der Rohrleitung 1 gesehen.

## Patentansprüche

1. Tank, insbesondere Kraftstofftank (2) für Kraftfahrzeuge, mit zumindest einer im Innenraum des Tanks angeordneten Tank-Innenrohrleitung (1), wobei die Tank-Innenrohrleitung (1) einen von einer Rohrwandung (3) umgebenen Fluidkanal aufweist, wobei die Rohrwandung (3) aus zumindest drei Schichten besteht, wobei eine Außenschicht (5) auf Basis eines aromatischen Polyamids, insbesondere auf Basis von Polyphthalamid (PPA) vorgesehen ist, wobei eine Zwischenschicht (6) auf Basis eines aliphatischen Polyamids vorhanden ist, wobei eine Innenschicht (7) auf Basis eines aromatischen Polyamids, insbesondere auf Basis von Polyphthalamid (PPA) vorgesehen ist und wobei die gesamte Wandstärke der Tank-Innenrohrleitung (1) 0,5 mm bis 3,5 mm, vorzugsweise 0,6 mm bis 3 mm und bevorzugt 0,6 mm bis 2,5 mm beträgt.

2. Tank nach Anspruch 1, wobei die Außenschicht (5) der Tank-Innenrohrleitung (1) aus zumindest 80 Gew.-%, vorzugsweise aus zumindest 85 Gew.-% und bevorzugt aus zumindest 90 Gew.-% eines aromatischen Polyamids, insbesondere Polyphthalamid besteht.

3. Tank nach einem der Ansprüche 1 oder 2, wobei die Außenschicht (5) der Tank-Innenrohrleitung (1) eine Schichtdicke von 0,1 mm bis 1,3 mm, vorzugsweise von 0,2 mm bis 1,2 mm und bevorzugt von 0,2 mm bis 1 mm aufweist.

4. Tank nach einem der Ansprüche 1 bis 3, wobei die Zwischenschicht (6) der Tank-Innenrohrleitung (1) aus zumindest 80 Gew.-%, vorzugsweise aus zumindest 85 Gew.-% und bevorzugt aus zumindest 90 Gew.-% Polyamid bzw. aliphatischem Polyamid besteht.

5. Tank nach einem der Ansprüche 1 bis 4, wobei die Zwischenschicht (6) der Tank-Innenrohrleitung (1) auf Basis von Polyamid 6 ausgebildet ist.

6. Tank nach einem der Ansprüche 1 bis 5, wobei die Zwischenschicht (6) der Tank-Innenrohrleitung (1) eine Schichtdicke von 0,1 mm bis 1,3 mm, vorzugsweise von 0,2 mm bis 1,2 mm und bevorzugt von 0,2 mm bis 1 mm aufweist.

7. Tank nach einem der Ansprüche 1 bis 6, wobei die Innenschicht (7) der Tank-Innenrohrleitung (1) aus zumindest 80 Gew.-%, vorzugsweise aus zumindest 85 Gew-% und bevorzugt aus zumindest 90 Gew.-% eines aromatischen Polyamids, insbesondere Polyphthalamid besteht.

8. Tank nach einem der Ansprüche 1 bis 7, wobei die Innenschicht (7) der Tank-Innenrohrleitung (1) eine Schichtdicke von 0,1 mm bis 1,3 mm, vorzugsweise von 0,2 mm bis 1,2 mm und bevorzugt von 0,2 mm bis 1 mm aufweist.

9. Tank nach einem der Ansprüche 1 bis 8, wobei die Innenschicht (7) und/oder die Zwischenschicht (6) und/oder die Außenschicht (5) der Tank-Innenrohrleitung(1) elektrisch leitfähig ausgebildet ist/sind.

10. Tank nach einem der Ansprüche 1 bis 9, wobei die Tank-Innenrohrleitung (1) lediglich die drei Schichten mit Außenschicht (5), Zwischenschicht (6) und Innenschicht (7) aufweist.

11. Tank nach einem der Ansprüche 1 bis 10, wobei die Zwischenschicht (6) dicker ist als die Außenschicht (5) und/oder dicker ist als die Innenschicht (7) Tank-Innenrohrleitung (1).

12. Tank nach einem der Ansprüche 1 bis 9 oder 11, wobei die Außenschicht (5) der Tank-Innenrohrleitung (1) mit der Zwischenschicht (6) über zumindest eine Adhäsivschicht verbunden ist und/oder wobei die Zwischenschicht (6) der Tank-Innenrohrleitung (1) mit der Innenschicht (7) über zumindest eine Adhäsivschicht verbunden ist.

13. Tank nach einem der Ansprüche 1 bis 12, wobei die Tank-Innenrohrleitung (1) an eine im Tank, insbesondere im Kraftstofftank (2) des Kraftfahrzeuges, angeordnete Pumpe angeschlossen ist.

14. Tank nach einem der Ansprüche 1 bis 13, wobei die Tank-Innenrohrleitung (1) zumindest bereichsweise in Form eines Wellrohres ausgestaltet ist.

## Claims

1. A tank, in particular a fuel tank (2) for motor vehicles, with at least one tank inner pipe (1) arranged inside of the tank, wherein the tank inner pipe (1) has a fluid channel enveloped by a pipe wall (3), wherein the pipe wall (3) consists of at least three layers, wherein an outer layer (5) based on an aromatic polyamide, in particular based on polyphthalamide (PPA), is provided, wherein an intermediate layer (6) based on an aliphatic polyamide is present, wherein an inner layer (7) based on an aromatic polyamide, in particular based on polyphthalamide (PPA), is provided, and wherein the entire wall thickness of the tank inner pipe (1) measures 0.5 mm to 3.5 mm, preferably 0.6 mm to 3 mm, and primarily 0.6 mm to 2.5 mm.

2. The tank according to claim 1, wherein the outer layer (5) of the tank inner pipe (1) consists of at least 80 %w/w, preferably of at least 85 %w/w, and primarily of at least 90 %w/w of an aromatic polyamide, in particular polyphthalamide.

3. The tank according to one of claims 1 or 2, wherein the outer layer (5) of the tank inner pipe (1) has a layer thickness of 0.1 mm to 1.3 mm, preferably of 0.2 mm to 1.2 mm, and primarily of 0.2 mm to 1 mm.

4. The tank according to one of claims 1 to 3, wherein the intermediate layer (6) of the tank inner pipe (1) consists of at least 80 %w/w, preferably of at least 85 %w/w, and primarily of at least 90 %w/w of polyamide or aliphatic polyamide.

5. The tank according to one of claims 1 to 4, wherein the intermediate layer (6) of the tank inner pipe (1) is designed based on polyamide 6.

6. The tank according to one of claims 1 to 5, wherein the intermediate layer (6) of the tank inner pipe (1) has a layer thickness of 0.1 mm to 1.3 mm, preferably of 0.2 mm to 1.2 mm, and primarily of 0.2 mm to 1 mm.

7. The tank according to one of claims 1 to 6, wherein the inner layer (7) of the tank inner pipe (1) consists of at least 80 %w/w, preferably of at least 85 %w/w, and primarily of at least 90 %w/w of an aromatic polyamide, in particular polyphthalamide.

8. The tank according to one of claims 1 to 7, wherein the inner layer (7) of the tank inner pipe (1) has a layer thickness of 0.1 mm to 1.3 mm, preferably of 0.2 mm to 1.2 mm, and primarily of 0.2 mm to 1 mm.

9. The tank according to one of claims 1 to 8, wherein the inner layer (7) and/or intermediate layer (6) and/or outer layer (5) of the tank inner pipe (1) have an electrically conductive design.

10. The tank according to one of claims 1 to 9, wherein the tank inner pipe (1) has only the three layers with an outer layer (5), intermediate layer (6) and inner layer (7).

11. The tank according to one of claims 1 to 10, wherein the intermediate layer (6) is thicker than the outer layer (5) and/or is thicker than the inner layer (7) [of the] tank inner pipe (1).

12. The tank according to one of claims 1 to 9 or 11 wherein the outer layer (5) of the tank inner pipe (1) is connected with the intermediate layer (6) by at least one adhesive layer, and/or wherein the intermediate layer (6) of the tank inner pipe (1) is connected with the inner layer (7) by at least one adhesive layer.

13. The tank according to one of claims 1 to 12, wherein the tank inner pipe (1) is linked to a pump arranged in the tank, in particular in the fuel tank (2) of the motor vehicle.

14. The tank according to one of claims 1 to 13, wherein at least areas of the tank inner pipe (1) are designed like a corrugated pipe.

## Revendications

1. Réservoir, notamment réservoir de carburant (2) pour véhicules automobiles, avec au moins une conduite intérieure de réservoir (1) disposée dans l'espace intérieur du réservoir, la conduite intérieure de réservoir (1) comportant un conduit de fluide entouré par une paroi tubulaire (3), la paroi tubulaire (3) étant composée d'au moins trois couches, une couche extérieure (5) à base d'un polyamide aromatique, notamment à base de polyphthalamide (PPA) étant prévue, une couche intermédiaire (6) à base d'un polyamide aliphatique existant, une couche intérieure (7) à base d'un polyamide aromatique, notamment à base de polyphthalamide (PPA) étant prévue et l'épaisseur de paroi totale de la conduite intérieure de réservoir (1) étant de 0,5 mm à 3,5 mm, de préférence de 0,6 mm à 3 mm et de préférence de 0,6 mm à 2,5 mm.

2. Réservoir selon la revendication 1, la couche extérieure (5) de la conduite intérieure de réservoir (1) étant composée d'au moins 80 %/poids, de préférence d'au moins 85 %/poids et de préférence d'au moins 90 %/poids d'un polyamide aromatique, notamment de polyphthalamide.

3. Réservoir selon l'une quelconque des revendications 1 ou 2, la couche extérieure (5) de la conduite intérieure de réservoir (1) comportant une épaisseur de couche de 0,1 mm à 1,3 mm, de préférence de 0,2 mm à 1,2 mm et de préférence de 0,02 mm à 1 mm.

4. Réservoir selon l'une quelconque des revendications 1 à 3, la couche intermédiaire (6) de la conduite intérieure de réservoir (1) étant composée d'au moins 80 %/poids, de préférence d'au moins 85 %/poids et de préférence d'au moins 90 %/poids d'un polyamide aromatique ou d'un polyamide aliphatique.

5. Réservoir selon l'une quelconque des revendications 1 à 4, la couche intermédiaire (6) de la conduite intérieure de réservoir (1) étant constituée à base de polyamide 6.

6. Réservoir selon l'une quelconque des revendications 1 à 5, la couche intermédiaire (6) de la conduite intérieure de réservoir (1) comportant une épaisseur de couche de 0,1 mm à 1,3 mm, de préférence de 0,2 mm à 1,2 mm et de préférence de 0,2 mm à 1 mm.

7. Réservoir selon l'une quelconque des revendications 1 à 6, la couche intérieure (7) de la conduite intérieure de réservoir (1) étant composée d'au moins 80 %/poids, de préférence d'au moins 85 %/poids et de préférence d'au moins 90 %/poids d'un polyamide aromatique, notamment de polyphthalamide.

8. Réservoir selon l'une quelconque des revendications 1 à 7 la couche intérieure (7) de la conduite intérieure de réservoir (1) comportant une épaisseur de couche de 0,1 mm à 1,3 mm, de préférence de 0,2 mm à 1,2 mm et de préférence de 0,2 mm à 1 mm.

9. Réservoir selon l'une quelconque des revendications 1 à 8, la couche intérieure (7) et/ou la couche intermédiaire (6) et/ou la couche extérieure (5) de la conduite intérieure de réservoir (1) étant constituée(s) électriquement conductrice(s).

10. Réservoir selon l'une quelconque des revendications 1 à 9, la conduite intérieure de réservoir (1) ne comportant que les trois couches avec une couche extérieure (5), une couche intermédiaire (6) et une couche intérieure (7).

11. Réservoir selon l'une quelconque des revendications 1 à 10, la couche intermédiaire (6) étant plus épaisse que la couche extérieure (5) et/ou plus épaisse que la couche intérieure (7) de la conduite intérieure de réservoir (1).

12. Réservoir selon l'une quelconque des revendications 1 à 9 ou 11, la couche extérieure (5) de la conduite intérieure de réservoir (1) étant reliée à la couche intermédiaire (6) par au moins une couche adhésive et/ou la couche intermédiaire (6) de la conduite intérieure de réservoir (1) étant reliée à la couche intérieure (7) par au moins une couche adhésive.

13. Réservoir selon l'une quelconque des revendications 1 à 12, la conduite intérieure de réservoir (1) étant raccordée à une pompe disposée dans le réservoir, notamment dans le réservoir de carburant (2) du véhicule automobile.

14. Réservoir selon l'une quelconque des revendications 1 à 13, la conduite intérieure de réservoir (1) étant structurée au moins par zones sous la forme d'un tuyau ondulé.
